(19) Europäisches Patentamt
European Patent Office
Office européen des brevets

(11) **EP 4 375 708 A1**

(12) **EUROPEAN PATENT APPLICATION**
published in accordance with Art. 153(4) EPC

(43) Date of publication:
**29.05.2024 Bulletin 2024/22**

(21) Application number: **21950862.9**

(22) Date of filing: **19.07.2021**

(51) International Patent Classification (IPC):
**G01S 17/48** (2006.01)   **G01S 17/88** (2006.01)
**B60M 1/28** (2006.01)

(52) Cooperative Patent Classification (CPC):
**B60M 1/28; G01S 17/48; G01S 17/88**

(86) International application number:
**PCT/ES2021/070533**

(87) International publication number:
**WO 2023/002068 (26.01.2023 Gazette 2023/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Telefonos, Lineas y Centrales, S.A.
28108 Alcobendas (ES)**

(72) Inventor: **RIVERA RODRÍGUEZ, Iván
VILLAVICIOSA DE ODÓN - MADRID (ES)**

(74) Representative: **Del Valle Valiente, Sonia
C/ Miguel Angel Cantero Oliva, 5,53
28660 Boadilla del Monte-Madrid (ES)**

(54) **DEVICE FOR MEASURING THE MOVEMENT OF A CONTACT WIRE OF AN OVERHEAD LINE WHEN A PANTOGRAPH PASSES**

(57) The invention describes a device (1) for measuring the vertical and/or transverse movement of a contact wire (202) of an overhead line (200), which comprises two emitters/receivers (2a, 2b) and a reflective plate (3) that are directed towards each other such that a light beam emitted by each emitter of the emitter/receiver (2a, 2b) is reflected on the reflective plate (3) and returns to the receiver of the emitter/receiver (2a, 2b). The emitters/receivers (2a, 2b) are mechanically fixed either to a fixed support (300) or to the contact wire (202) of the overhead line (200) of which the movement is to be measured, and the reflective plate (3) is mechanically fixed to the other of either the fixed support (300) or the contact wire (202). An analysis of the light beams received by the receivers (2a, 2b) after being reflected on the reflective plate (3) allows the vertical and/or transverse movement to be obtained.

FIG. 4

EP 4 375 708 A1

**Description**

**OBJECT OF THE INVENTION**

The present invention belongs to the field of measurement instruments used in the railway sector.

The object of the present invention relates to an instrument which allows the contactless measurement of the vertical and/or transverse movement of the contact wire of an overhead line when the pantograph of a train passes.

**BACKGROUND OF THE INVENTION**

The aerial contact or overhead line system is used today for power distribution on railway lines. The connection between an overhead line and a vehicle is made through a pantograph, which must ensure uninterrupted sliding contact with the wire of the overhead line at high speeds.

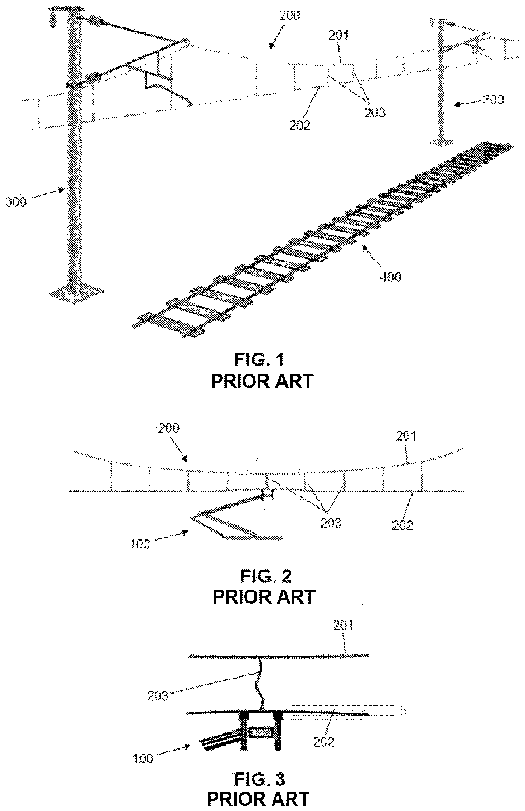

By way of example, Figure 1 shows a perspective view of an overhead line segment of a railway line. The overhead line (200) is fixed to a pair of posts (300) and comprises three basic elements: a support wire (201), a contact wire (202), and droppers (203). The support wire (201) performs the function of reducing as much as possible the height variations of the contact wire (202) with respect to the tracks (400). To that end, it runs at a height that is greater than that of the contact wire (202) and is connected thereto by means of a series of droppers (203) of different lengths. This system facilitates obtaining a contact wire (202) with a much more uniform height than that which can be achieved by simply tensioning the wire mechanically.

It should be noted that overhead lines which may lack a support wire and droppers are used in other fields such as, for example, in tramway networks.

In any case, continuing with the preceding example of a railway overhead line (200), the overhead line (200) deforms and oscillates under the dynamic actions caused by the pantograph (100). Figures 2 and 3 schematically show how the pantograph (100) exerts a certain upward pressure on the contact wire (202). As a result, the part of the contact wire (202) touching the pantograph (100) moves upward, with the corresponding dropper (203) being left under tension.

Sometimes, due to its inertia, the pantograph is unable to instantaneously follow the movement of the overhead line, causing contact discontinuities that lead to the appearance of electric arcs. This does not only imply a discontinuity in the power supply to the electric motors that drive the train, but also the premature wear of the pantograph and the overhead line.

This problem makes it necessary to measure the vertical movement of the contact wire of the overhead line when the pantograph passes. A measuring device of this type must comply with many restrictions, including respecting the kinematic gauge through which the train moves and also those related to the electrical voltage of the overhead line, known as the electrical gauge.

A device for measuring the vertical displacement of the contact wire of the overhead line based on an artificial vision camera that captures the movement of the overhead line and determines the movement through advanced image analysis techniques is known today. This system is excessively rigid and vulnerable to weather effects, in addition to having a very high cost.

A system based on the arrangement of a vertically-arranged linear potentiometer mechanically connected to the contact wire, such that the elevation of said contact wire causes a variation in the potentiometer, is also known. This system is very inaccurate and excessively invasive.

Another known device is based on the application of optical fibres with Bragg gratings. This system is also very invasive and expensive.

In short, there is a need for new and improved movement measuring devices in this field of the art.

**DESCRIPTION OF THE INVENTION**

The present invention describes an improved device for measuring the movement of the contact wire which occurs when a pantograph passes that solves the preceding problems. The device is based on the optical analysis of a beam that travels back and forth between a fixed point and the contact wire of the overhead line, which allows determining the vertical movement of the contact wire. Moreover, it is possible to use additional techniques for determining not only the vertical movement of the contact wire, but also the transverse movement.

The device of the invention essentially comprises an emitter/receiver and a reflective plate that are directed towards each other, such that a light beam emitted by the emitter is reflected on the reflective plate and returns to the receiver. The emitter/receiver is mechanically fixed either to a fixed support or to the contact wire of the overhead line of which the movement is to be measured. In turn, the reflective plate is mechanically fixed to the other of either the fixed support or the contact wire of the overhead line of which the movement is to be measured. Therefore, an analysis of the light beam emitted by the emitter and received by the receiver after being reflected on the reflective plate allows obtaining the vertical and/or transverse movement of the contact wire which occurs when the pantograph passes.

In principle, the emitter/receiver and the reflective plate can be in any position provided that one of them is fixed to a fixed point and the other is fixed to the contact wire. The main concept is that the distance travelled by the beam, and/or the point to which said beam returns in the emitter/receiver, changes depending on the vertical movement of said contact wire. Therefore, a relatively simple analysis based on geometric considerations relative to the distance travelled by the light beam, calculated by means of the time-of-flight thereof, or based on changes in the reflected intensity, allows deducing the vertical and/or transverse distance that the contact wire has moved.

This configuration is advantageous because it prevents drawbacks relating to the use of devices requiring mechanical contact with the contact wire such as the linear potentiometers used in the prior art. Furthermore, the geometric analysis performed is less complex compared to the image analysis techniques used in the artificial vision camera-based systems of the prior art, as well as less sensitive to meteorological variables.

According to a particularly preferred embodiment of the invention, the emitter/receiver is fixed to the fixed support and the reflective plate is fixed to the contact wire of the overhead line.

This configuration is particularly advantageous because it prevents the need for wired electrical connections to the element fixed to the contact wire. The only wired connections of the device are connected to the emitter/receiver and can be readily channelled through the fixed support. For example, a post of the type conventionally used for supporting the overhead line can be used simply as a fixed support. Moreover, the only element fixed to the contact wire is the reflective plate which requires no connections and hardly any maintenance.

According to an even more preferred embodiment of the invention, the emitter/receiver is fixed to the fixed support in a position located above the contact wire and the reflective plate is fixed to an upper side of the contact wire of the overhead line. In other words, the light beam emitted by the emitter/receiver is essentially vertical, or as will be described below with respect to a more particularly preferred embodiment, it has a small inclination with respect to the vertical. Therefore, the reflective plate in this configuration is fixed on the contact wire in a position essentially parallel to a horizontal plane, or only with a small inclination with respect to the horizontal plane. This allows determining the distance between the sensor and the reflective plate to obtain the vertical movement of the contact wire which occurs when the pantograph passes.

This configuration is particularly advantageous because the loads exerted by wind on the reflective plate are much lower than in other configurations in which the reflective plate has a greater inclination with respect to the horizontal or is contained in a vertical plane. A lower wind load reduces the lateral movement of the contact wire.

Two particularly preferred vertical and horizontal configurations respectively are described below. Each of them includes two versions, one in which only the vertical movement is measured and another in which the transverse movement is also measured.

## 1. Vertical configuration

### 1.a Measurement of vertical movement

In this preferred embodiment of the invention, the emitter/receiver is a time-of-flight sensor or reflectometer that emits a light beam which is contained in a plane perpendicular to the contact wire and vertically directed downwards towards the reflective plate. This allows determining the distance between the emitter/receiver and the reflective plate so as to directly obtain the vertical movement of the contact wire which occurs when the pantograph passes. Even more preferably, in this particular case the reflective plate is a flat plate fixed according to a horizontal plane to the contact wire.

This configuration is particularly advantageous because it facilitates the calculation of the vertical movement of the contact wire, which is obtained almost directly from the calculation of the distance travelled by the light beam, in addition to the fact that the assembly is much simpler than in the preceding case.

### 1.b Measurement of vertical and transverse movements

In a preferred embodiment of the invention which is an alternative to the foregoing, the device comprises two emitters/receivers made up of two time-of-flight sensors or precision reflectometers that emit light beams which are contained in a plane perpendicular to the contact wire and directed with an inclination with respect to the vertical towards two portions of the reflective plate respectively facing each of said emitters/receivers. Therefore, the light beams emitted by the emitters/receivers cross one another on their way back and forth between each emitter/receiver and the corresponding portion of the reflective plate. This arrangement allows determining the distances between each emitter/receiver and the corresponding portion of the reflective plate, thereby obtaining both the vertical movement and the transverse movement of the contact wire which occur when the pantograph passes. Preferably, in this case the reflective plate is formed by the two portions which are in the form of essentially rectangular flat plates inclined with respect to one another and connected by an edge fixed in parallel to the contact wire.

This configuration is particularly advantageous because it allows determining not only the vertical movement, but also the transverse movement of the contact wire, in a relatively simple manner.

## 2. Horizontal configuration

### 2.a Measurement of vertical movement

In this preferred embodiment of the invention, the device comprises a first emitter/receiver made up of a time-of-flight sensor or reflectometer fixed to the fixed support in a position facing the reflective plate. In turn, the reflective plate is fixed to an upper side of the contact wire of the overhead line and contained in a vertical plane passing through said contact wire. The first emitter/receiver is located facing the reflective plate, in other words, on one side of the contact wire, such that its light beam strikes an upper edge of said reflective plate perpendicularly, such that only a portion of the light beam of the second emitter/receiver is reflected by the reflective plate when there is no movement of the contact wire. With this arrangement, the vertical movement of the contact wire is determined depending on a change in the amount reflected by the reflective plate of the light beam emitted by the second emitter/receiver.

This configuration may be advantageous due to a greater ease of installation, since the emitters/receivers are installed in a position on one side of the contact wire, which is more accessible than in the two preceding configurations.

### 2.b Measurement of vertical and transverse movements

In this preferred embodiment, the device comprises a second emitter/receiver made up of a time-of-flight sensor or reflectometer which are fixed to the fixed support. The second emitter/receiver is located facing the reflective plate, in other words, also on one side of the contact wire, at a lower height than the first emitter/receiver, such that its light beam strikes a central portion of said reflective plate perpendicularly. In that sense, the distance between the first emitter/receiver and the reflective plate can be determined to obtain the transverse movement of the contact wire which occurs when the pantograph passes.

This configuration is particularly advantageous because it allows determining not only the vertical movement, but also the transverse movement of the contact wire, in a relatively simple manner.

In any case, regardless of the type of configuration, when a time-of-flight sensor is used, it can be of any type provided that it is configured to emit pulsed infrared light.

According to another more preferred embodiment, the device of the invention further comprises a shield arranged above the emitter/receiver in order to protect it. For example, the emitter/receiver can be fixed to a lower surface of the shield.

This configuration is advantageous because the overhead light of the sun may cause disturbances in the values of the light beam received by the emitter/receiver, negatively affecting the precision of the movement measurement or even, in the worst case, completely preventing the performance of measurements.

Lastly, it should be indicated that the movement measurement mechanisms described in the horizontal and vertical configurations are interchangeable. In other words, the configuration of the device in its vertical configuration, with a reflective plate formed by two essentially V-shaped portions and with two emitters/receivers that emit light beams that cross one another, may also be arranged in the horizontal configuration. Similarly, the configuration of the device in its horizontal configuration, in other words, with a reflective flat plate and two emitters/receivers located in different positions, such that one of them serves to measure the distance between the emitter/receiver and the reflective plate, and the other determines the movement of the reflective plate in a plane transverse to the direction of the emitted light based on changes in the amount of reflected light due to part of it no longer being reflected by said reflective plate, may also be arranged in a vertical configuration.

## BRIEF DESCRIPTION OF THE DRAWINGS

Figure 1 shows a perspective view of an overhead line segment according to the prior art.
Figure 2 shows a schematic side view of the contact area between the pantograph and the overhead line.
Figure 3 shows a detailed schematic side view of the contact area between the pantograph and the overhead line.
Figure 4 shows a schematic perspective view of a first embodiment of the device of the present invention.
Figure 5 shows a more detailed view of the first embodiment of the device of the present invention.
Figures 6a-6c show three views of the reflective plate of the first embodiment of the device of the present invention.
Figure 7 schematically shows the paths of the light beams emitted by the emitters of the first embodiment of the device of the present invention.

Figure 8 shows in greater detail the lower triangle formed by the light beams emitted by the emitters of the first embodiment of the device of the present invention.

Figure 9 graphically shows how geometric changes occur in the preceding triangles when the contact wire moves.

Figure 10 shows a schematic perspective view of a second embodiment of the device of the present invention.

Figure 11 shows a more detailed view of the configuration of the second embodiment of the device of the present invention.

Figures 12a and 12b show respective views of the reflective plate of the second embodiment of the present invention in a standby position and in a vertically moved position, respectively.

## PREFERRED EMBODIMENT OF THE INVENTION

Several examples of the devices according to the present invention are described below in reference to the figures.

## First embodiment: vertical configuration

The first embodiment is based on the use of one or more emitters/receivers, for example time-of-flight sensors, reflectometry sensors or, in any case, any type of sensor capable of emitting a light beam and of receiving it after reflection, for determining the distance between the emitter/receiver itself and the body on which the light beam has been reflected. These emitters/receivers are arranged at a greater height than the contact wire and a reflective plate fixed to the contact wire, such that the light beam or beams emitted downwards are reflected on the reflective plate and return to the emitter/receiver. Depending on the specific configuration, this arrangement allows obtaining only the vertical movement, when only a single emitter/receiver is used, or the vertical and transverse movements, when two emitters/receivers are used.

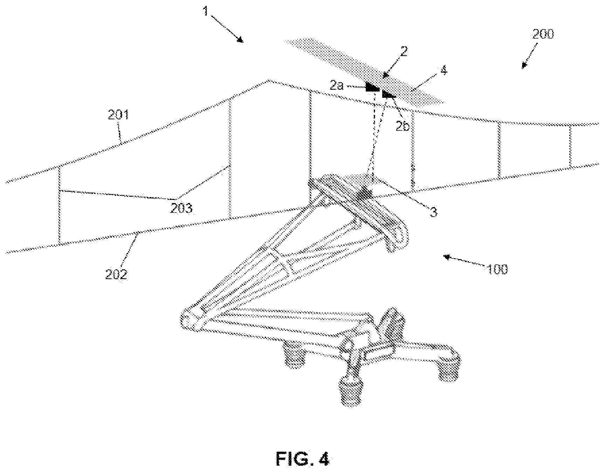

Figure 4 shows a perspective view of a configuration of a device (1) which comprises two emitters/receivers (2a, 2b), and which therefore allows determining both the vertical movement and the transverse movement of the contact wire (202) of the overhead line (200).

More specifically, as can be seen in Figure 4, the overhead line (100) is formed by a support wire (201) connected to the contact wire (202) through droppers (203). The pantograph (100), fixed to the train, moves along the overhead line (200) making contact with the lower part of the contact wire (202), thereby causing the movement thereof in the vertical and/or transverse direction.

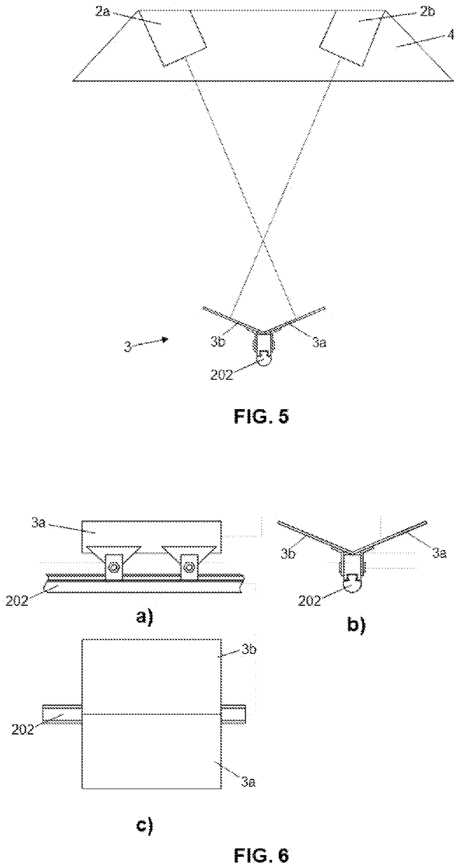

The device (1) of this first embodiment comprises two emitters/receivers (2a, 2b) fixed to a fixed support (300), which are not show in the figures, above the contact wire (202) of the overhead line (200). In particular, the two emitters/receivers (2a, 2b) are essentially fixed vertically above the contact wire (202), each of them being located slightly the same distance towards opposite sides of the vertical plane of the contact wire (202). Each of the emitters/receivers (2a, 2b) is configured to emit a light beam contained in a plane perpendicular to the contact wire (202) such that it passes through the vertical plane of the contact wire (202) until reaching a point located at a small lateral distance from the contact wire (202) itself on an opposite side of the vertical plane of the contact wire (202) with respect to that in which the emitter/receiver (2a, 2b) in question is located. This arrangement can be seen in greater detail in Figure 5, which shows a view contained in a plane perpendicular to the contact wire (202).

The device (1) also comprises a reflective plate (3) fixed to an upper side of the contact wire (202). In this specific example in which two emitters/receivers (2a, 2b) are used, the reflective plate (3) is formed by two rectangular-shaped, non-coplanar, flat portions (3a, 3b) connected through one of the sides thereof, thereby forming an edge which is parallel to the contact wire (202). The reflective plate (3) can be fixed to the contact wire (202) by any way known in the art, for example by means of a clamp. Each of the portions (3a, 3b) of the reflective plate (3) therefore protrudes laterally from the contact wire (202) and has an inclination the normal of which is parallel to the direction of the light beam emitted by a respective emitter/receiver (2a, 2b). The configuration of the reflective plate (3) is shown in detail in Figures 6a-6c.

In that sense, when the emitter/receiver (2a) emits a light beam, this light beam is reflected on the portion (3a) of the reflective plate (3) and returns to the same emitter/receiver (2a). Similarly, when the emitter/receiver (2b) emits a light beam, this light beam is reflected on the portion (3b) of the reflective plate (3) and returns to the same emitter/receiver (2b). A suitable analysis of the distance travelled by each of the light beams on its way back and forth between the respective emitter/receiver (2a, 2b) and the respective portion (3a, 3b) of the reflective plate (3) allows determining the transverse and vertical movements of the contact wire (202), as described in greater detail below.

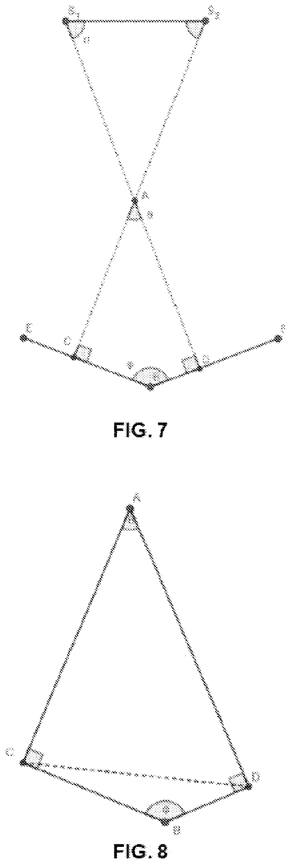

In fact, Figure 7 schematically shows the geometric configuration of the device (1) in a plane perpendicular to the contact wire (202). In this figure:

•    S1 and S2 are the focal points of the two emitters/receivers (2a, 2b).

- σ is the angle that they both form with respect to the plane of assembly thereof which, in this configuration, is chosen such that they are both the same.
- E and E' are the ends of the respective portions (3a, 3b) of the reflective plate (3).
- B is the line connecting the two portions (3a, 3b) of the reflective plate (3), through which it is connected to the clamp which secures said reflective plate (3) to the contact wire (202).
- A is the crossing point of the light beams emitted by the emitters/receivers (2a, 2b), in this particular example laser beams.
- C and D are the variable incidence points of the laser beams in each of the planes of the reflective plate (3).
- ϕ is the angle of separation of the two portions (3a, 3b) of the reflective plate (3), adjusted such that the laser beams strikes C and D perpendicularly.

The objective is to establish the movement of point B, plus a vertical increment introduced by the clamp and the contact wire (202), in the vertical and horizontal axes with respect to the plane of assembly of the emitters/receivers (2a, 2b) with focal points S1 and S2.

To characterize the geometry of the measurement assembly, the quadrilateral ABCD shown in Figure 8 is taken into account. This quadrilateral can be broken down into two triangles: ACD and BCD.

Angles $\widehat{ACB}$ and $\widehat{ADB}$ are right angles by construction. Angle $\widehat{CAD}$ is also known by construction, and it is the angle of incidence of the laser beams emitted by the emitters/receivers (2a, 2b). For brevity, it will be referred to as $\theta = \widehat{CAD}$.

Angle $\widehat{CBD}$ is also known by construction; it is the angle at which the two portions (3a, 3b) of the reflective plate (3) are located with respect to one another. Since the sum of the angles of a quadrilateral is $2\pi$ radians, it is trivial to see that $\widehat{CBD} = \pi - \theta$.

Distances AD and AC will be known by the measurements of the emitters/receivers (2a, 2b), and will be referred to as $m_1$ and $m_2$ respectively.

Therefore, it would be necessary to solve the triangle ACD. Using the theorem of cosines, it is possible to obtain the unknown side CD:

$$CD^2 = m_1^2 + m_2^2 - 2m_1 m_2 \cos\theta$$

With respect to the angles, neither $\widehat{ACD}$ nor $\widehat{CDA}$ is known. By using the theorem of sines:

$$\frac{\sin\theta}{CD} = \frac{\sin\widehat{ACD}}{m_1}$$

By resolving the sine of $\widehat{ACD}$:

$$\sin\widehat{ACD} = \frac{m_1}{CD}\sin\theta$$

Equivalently:

$$\sin\widehat{CDA} = \frac{m_2}{CD}\sin\theta$$

Given that angles $\widehat{ACB}$ and $\widehat{BDA}$ are right angles, there are obtained, as a result of complementarity of angles, $\widehat{ACD} + \widehat{BCD} = \frac{\pi}{2}$ and $\widehat{ADC} + \widehat{BDC} = \frac{\pi}{2}$. Therefore:

6

$$\widehat{BCD} = \frac{\pi}{2} - \widehat{ACD}$$

By applying the theorem of sine again, this time on the triangle BCD:

$$\frac{\sin \widehat{CBD}}{CD} = \frac{\sin \widehat{BCD}}{BD}$$

By substituting the value of $\widehat{BCD}$:

$$\frac{\sin \widehat{CBD}}{CD} = \frac{\sin \frac{\pi}{2} - \widehat{ACD}}{BD} = \frac{\cos \widehat{ACD}}{BD}$$

The following is obtained by resolving:

$$BD = CD \frac{\cos \widehat{ACD}}{\sin \widehat{CBD}}$$

Since the value of the sine of $\widehat{ACD}$ is known, the Pythagorean identity is applied and substituted to obtain:

$$\cos \widehat{ACD} = \sqrt{1 - \sin^2 \widehat{ACD}} = \sqrt{1 - \frac{m_1^2}{CD^2} \sin^2 \theta}$$

Therefore,

$$BD = \frac{CD}{\sin \widehat{CBD}} \sqrt{1 - \frac{m_1^2}{CD^2} \sin^2 \theta}$$

by substituting the expression of CD and bearing in mind that $\widehat{CBD} = \pi\text{-}\theta$:

$$BD = \frac{1}{\sin \pi - \theta} \sqrt{m_1^2 + m_2^2 - 2m_1 m_2 \cos \theta} \sqrt{1 - \frac{m_1^2 \sin^2 \theta}{m_1^2 + m_2^2 - 2m_1 m_2 \cos \theta}}$$

As a result of the periodicity of the sine, and by performing operation with the radicals:

$$BD = -\frac{1}{\sin \theta} \sqrt{m_1^2 + m_2^2 - 2m_1 m_2 \cos \theta - m_1^2 \sin^2 \theta}$$

and by applying again the Pythagorean identity on the squared sine,

$$BD = -\frac{1}{\sin \theta} \sqrt{m_2^2 - 2m_1 m_2 \cos \theta + m_1^2 \cos^2 \theta}$$

Simplification can be performed by applying the Newton's binomial:

$$BD = \frac{m_2 - m_1 \cos\theta}{\sin\theta}$$

The following is obtained for the adjacent side BC using a similar process:

$$BC = \frac{m_1 - m_2 \cos\theta}{\sin\theta}$$

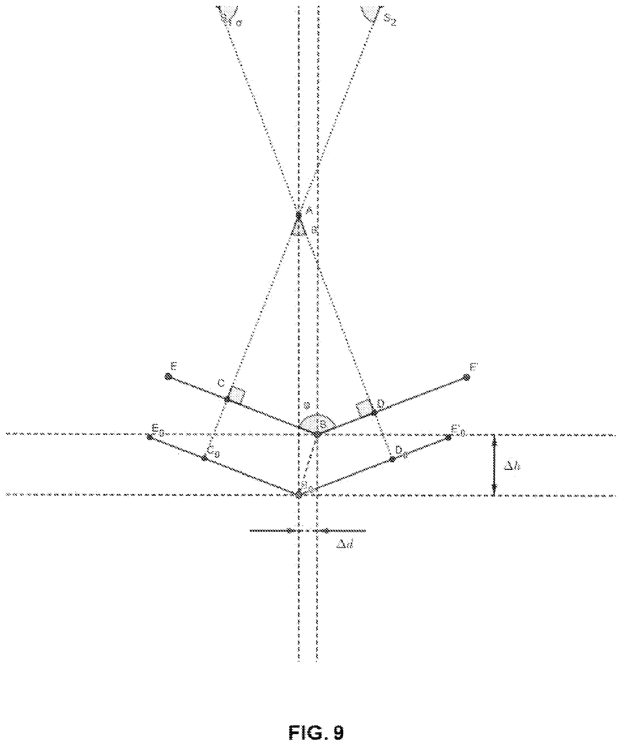

Taking all of the above into account, it is possible to calculate the movement of the contact wire (202) shown in Figure 9. Figure 9 shows a typical movement of the reflective plate (3) when a pantograph (100) passes with two positions of the portions (3a, 3b): EE' and $E_0E_0$'. The merit factor to be measured is movement $B_0B$, and more precisely its decomposition in the horizontal and vertical axes of the assembly: $\Delta d$ and $\Delta h$.

To calculate said decomposition, a sequence of triangles with respect to the horizontal and vertical axes passing through $B_0$ and b is considered in each case.

To calculate $\Delta h$, the following sum is considered (the sign criterion used is positive upwards):

- the height from $C_0$ of the right-angled triangle formed by the horizontal axis passing through $B_0$, with hypotenuse $B_0c_0$,
- the height from C of the right-angled triangle formed by the horizontal axis passing through $C_0$ and hypotenuse $C_0C$ (which, as it is part of the emitter/receiver measurement, will be referred to as $\Delta d_2$, just as it will be referred to as $\Delta d_1$ to $D_0D$) and
- in negative value, the height from C of the right-angled triangle formed by the horizontal axis passing through C and having BC as hypotenuse.

The angles of the hypotenuses with respect to the mentioned heights are, by construction, $\theta/2$.

$$\Delta h = B_0C_0 \sin\frac{\theta}{2} + \Delta d_2 \cos\frac{\theta}{2} - BC \sin\frac{\theta}{2}$$

$B_0c_0$ and BC are calculated from the expression already obtained

$$BC = \frac{m_1 - m_2 \cos\theta}{\sin\theta}$$

Substituting in the case of $B_0c_0$ the values of $m_1$ and $m_2$ with $m_1+\Delta d_1$ and $m_2+\Delta d_2$, respectively:

$$B_0C_0 = \frac{m_1 + \Delta d_1 - (m_2 + \Delta d_2) \cos\theta}{\sin\theta}$$

The following is obtained by performing operation and simplification:

$$\Delta h = \frac{1}{2}(\Delta d_1 - \Delta d_2 \cos\theta) \sec\frac{\theta}{2} + \Delta d_2 \cos\frac{\theta}{2}$$

In the same manner, it would be possible to choose to travel an alternative path of triangle heights, adding:

- the height from $D_0$ of the right-angled triangle formed by the horizontal axis passing through $B_0$ with hypotenuse $B_0d_0$,
- the height from D of the right-angled triangle formed by the horizontal axis passing through $D_0$ and hypotenuse $D_0D$ (which will be referred to as $\Delta d_1$) and
- in negative value, the height from D of the right-angled triangle formed by the horizontal axis passing through D and having BD as hypotenuse.

There is obtained using a similar method:

$$\Delta h = \frac{1}{2}(\Delta d_2 - \Delta d_1 \cos\theta)\sec\frac{\theta}{2} + \Delta d_1 \cos\frac{\theta}{2}$$

and it can be verified that there are real values of $\Delta d_1$, $\Delta d_2$ and $\theta$ that satisfy the corresponding equality.

To calculate $\Delta d$, two paths can also be followed (the sign criterion will be positive towards the right):

- to the right along the leg from $B_0$ along the horizontal axis passing through said point, of the right-angled triangle with hypotenuse $B_0 d_0$,
- to the left along the leg from $D_0$ along the horizontal axis passing through said point, of the right-angled triangle with hypotenuse $D_0 D$, and
- to the left along the leg from B along the corresponding horizontal axis, of the right-angled triangle with hypotenuse BD.

By using this path,

$$\Delta d = B_0 D_0 \cos\frac{\theta}{2} - \Delta d_1 \sin\frac{\theta}{2} - BD\cos\frac{\theta}{2}$$

and performing substitution, operation, and simplification in a similar manner:

$$\Delta d = \frac{1}{2}(\Delta d_2 - \Delta d_1 \cos\theta)\csc\frac{\theta}{2} - \Delta d_2 \sin\frac{\theta}{2}$$

The other option, with identical sign criterion, is:

- to the left along the leg from $B_0$ along the horizontal axis passing through said point, of the right-angled triangle with hypotenuse $B_0 c_0$,
- to the right along the leg from $C_0$ along the horizontal axis passing through said point, of the right-angled triangle with hypotenuse $C_0 C$, and
- to the right along the leg from B along the corresponding horizontal axis, of the right-angled triangle with hypotenuse BC.

In this case, the following is obtained:

$$\Delta d = -B_0 C_0 \cos\frac{\theta}{2} + \Delta d_2 \sin\frac{\theta}{2} + BC\cos\frac{\theta}{2}$$

and by performing substitution, operation, and simplification:

$$\Delta d = \frac{1}{2}(\Delta d_2 \cos\theta - \Delta d_1)\csc\frac{\theta}{2} + \Delta d_2 \sin\frac{\theta}{2}$$

It is also verified that there are real values of $\Delta d_1$, $\Delta d_2$ and $\theta$ that satisfy the corresponding equality.

The actual distances measured by the emitters/receivers (2a, 2b) with the system at rest are:

$$d_1 = S_1 A + AD + D_0 D \qquad d_2 = S_2 A + AC + C_0 C$$

and they will be, with any measured elevation

$$d'_1 = S_1 A + AD \qquad d'_2 = S_2 A + AC$$

It can be seen that $\Delta h$ and $\Delta d$ only depend on the difference in absolute value of the value measured at rest with respect to the value at any active instant.

Moreover, in the assembly, the internal angle of the sensors is $\sigma$. $\theta$ can be established as a function of $\sigma$, taking into account this elementary identity of the triangle $S_1ACE_2$: $2\sigma+\theta= \pi$. Therefore: $\theta= \pi\text{-}2\sigma$

The expressions of $\Delta h$ and $\Delta d$ are:

$$\Delta h = \frac{1}{2}(\Delta d_1 - \Delta d_2 \cos(\pi - 2\sigma)) \sec\left(\frac{\pi}{2} - \sigma\right) + \Delta d_2 \cos\left(\frac{\pi}{2} - \sigma\right)$$

By applying trigonometric identities,

$$\Delta d = \frac{1}{2}(\Delta d_2 - \Delta d_1 \cos(\pi - 2\sigma)) \csc\left(\frac{\pi}{2} - \sigma\right) - \Delta d_2 \sin\left(\frac{\pi}{2} - \sigma\right)$$

which, with similar simplifications, is:

$$\Delta d = \frac{1}{2}(\Delta d_2 + \Delta d_1 \cos 2\sigma) \sec \sigma - \Delta d_2 \cos \sigma$$

**Second embodiment: horizontal configuration**

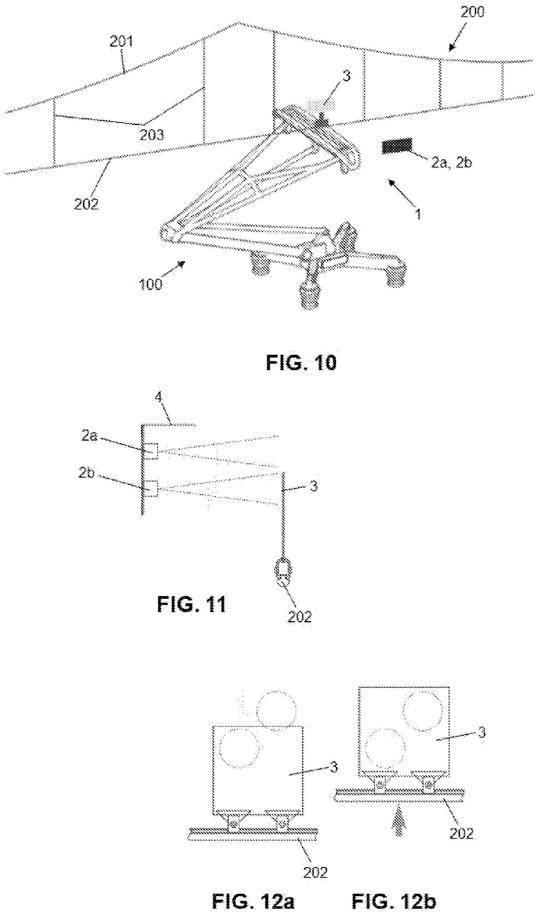

In this second embodiment, as can be seen in Figure 10, the reflective plate (3) is fixed to the contact wire (202) contained in a plane perpendicular to the horizontal and in the direction of the contact wire (202), and the pair of emitters/receivers (2a, 2b) is located facing the reflective plate (3) essentially perpendicular to said vertical plane. In other words, the pair of emitters/receivers (2a, 2b) is located on one side of the contact wire (202). Furthermore, the reflective plate (3) of this second embodiment is a flat plate. Therefore, the light beams emitted by the emitters/receivers (2a, 2b) perpendicular to the vertical plane of the contact wire (202), in other words, in a horizontal direction perpendicular to a vertical plane containing the contact wire (202), is reflected on the reflective plate (3) and returns to the emitters/receivers (2) themselves.

More specifically, as can be seen in Figure 11, a first emitter/receiver (2a) is located at a height such that only a portion of the emitted light beam strikes the reflective plate (3) when it is in its rest position or non-vertically moved position when the pantograph of the train is not passing. Specifically, the light beam emitted by this first emitter (2a) strikes an area of the upper edge of the reflective plate, as shown in Figure 12a. In that sense, when the reflective plate (3) moves vertically upwards, the surface of the light beam striking the reflective plate (3) increases, as can be seen in Figure 12b, and therefore the intensity of the reflected light which returns to the first emitter/receiver (2a) itself also increases. This change in the light received by the first emitter/receiver (2a) allows determining the distance of vertical movement of the contact wire (202).

Moreover, the second emitter/receiver (2b) is located at a height such that all the emitted light beam strikes the reflective plate (3) regardless of the distance of vertical movement thereof. Therefore, all the light beam emitted by this second emitter/receiver (2b) returns to same, and it is possible to easily determine the distance between the reflective plate (3) and the emitter/receiver (2b), which corresponds to the transverse movement of the contact wire (202).

**Claims**

1. A measuring device (1) for measuring the movement of a contact wire (202) of an overhead line (200) when a pantograph (100) passes, **characterized in that** it comprises an emitter/receiver (2) and a reflective plate (3) that are directed towards each other such that a light beam emitted by the emitter of the emitter/receiver (2) is reflected on the reflective plate (3) and returns to the receiver of said emitter/receiver (2);

   wherein the emitter/receiver (2) is mechanically fixed either to a fixed support (300) or to the contact wire (202) of the overhead line (200) of which the movement is to be measured; and
   wherein the reflective plate (3) is mechanically fixed to the other of either the fixed support (300) or the contact wire (202) of the overhead line (200) of which the movement is to be measured,
   such that an analysis of the light beam emitted by the emitter of the emitter/receiver (2) and received by the receiver of the emitter/receiver (2) after being reflected on the reflective plate (3) allows obtaining the vertical and/or transverse movement of the contact wire (202) which occurs as the pantograph (100) passes.

2. The measuring device (1) according to claim 1, wherein the emitter/receiver (2) is fixed to the fixed support (300) and the reflective plate (3) is fixed to the contact wire (202) of the overhead line (200).

3. The measuring device (1) according to claim 2, wherein the emitter/receiver (2) is fixed to the fixed support (300) in a position located above the contact wire (202) and the reflective plate (3) is fixed to an upper side of the contact wire (202) of the overhead line (200).

4. The measuring device (1) according to claim 3, comprising an emitter/receiver (2) made up of a time-of-flight sensor or reflectometer that emits a light beam which is contained in a plane perpendicular to the contact wire (202) and directed vertically downwards towards the reflective plate (3), determining the distance between the emitter/receiver (2) and the reflective plate (3) in order to obtain vertical movement of the contact wire (202) which occurs when the pantograph (100) passes.

5. The measuring device (1) according to claim 4, wherein the reflective plate (3) is a flat plate fixed according to a horizontal plane to the contact wire (202).

6. The measuring device (1) according to claim 3, comprising two emitters/receivers (2a, 2b) made up of two time-of-flight sensors or reflectometers that emit light beams which are contained in a plane perpendicular to the contact wire (202) and oriented with an inclination with respect to the vertical towards two portions (3a, 3b) of the reflective plate (3) respectively facing each of said emitters/receivers (2a, 2b), such that the light beams emitted by the emitters/receivers (2a, 2b) cross one another on their way back and forth between each emitter/receiver (2a, 2b) and the corresponding portion (3a, 3b) of the reflective plate (3), determining the distances between each emitter/receiver (2a, 2b) and each portion (3a, 3b) of the reflective plate (3) to obtain both the vertical movement and the transverse movement of the contact wire (202) that occurs when the pantograph (100) passes.

7. The measuring device (1) according to claim 6, wherein the two portions (3a, 3b) of the reflective plate (3) are in the form of essentially rectangular flat plates inclined with respect to one another and connected by an edge fixed parallel to the contact wire (202).

8. The measuring device (1) according to claim 2, comprising a first emitter/receiver (2a) made up of a time-of-flight sensor or reflectometer fixed to the fixed support (300), and wherein the reflective plate (3) is fixed to an upper side of the contact wire (202) of the overhead line (200) and contained in a vertical plane that passes through said contact wire (202), the first emitter/receiver (2a) being located in a position facing the reflective plate (3) such that its light beam strikes an upper edge of said reflective plate (3) perpendicularly, such that only a portion of the light beam from the first emitter/receiver (2a) is reflected by the reflective plate (3) when there is no movement of the contact wire (202), with the vertical movement of the contact wire (202) being determined depending on a change in the amount of light reflected by the reflective plate (3) from the light beam emitted by the first emitter/receiver (2a).

9. The measuring device (1) according to claim 8, further comprising a second emitter/receiver (2b) made up of a time-of-flight sensor or reflectometer fixed to the fixed support (300), the second emitter/receiver (2b) being located facing the reflective plate (3) at a lower height than the first emitter/receiver (2a), such that its light beam strikes a central portion of said plate reflector (3) perpendicularly, with the distance between the second emitter/receiver (2a) and the reflective plate (3) being determined to obtain the transverse movement of the contact wire (202) that occurs when the pantograph (100) passes.

10. The measuring device (1) according to any of claims 4-9, wherein the time-of-flight sensor (2) is configured to emit pulsed infrared light.

11. The measuring device (1) according to any of the preceding claims, further comprising a shield (4) arranged above the emitter/receiver (2) to protect it (3) from overhead light.

12. The measuring device (1) according to claim 11, wherein the emitter/receiver (2) is fixed to a lower surface of the shield (4).

**FIG. 1**
**PRIOR ART**

**FIG. 2**
**PRIOR ART**

**FIG. 3**
**PRIOR ART**

**FIG. 4**

**FIG. 5**

a)

b)

c)

**FIG. 6**

FIG. 7

FIG. 8

FIG. 9

**FIG. 10**

**FIG. 11**

**FIG. 12a**     **FIG. 12b**

## INTERNATIONAL SEARCH REPORT

| International application No. |
|---|
| PCT/ES2021/070533 |

### A. CLASSIFICATION OF SUBJECT MATTER

**See extra sheet**

According to International Patent Classification (IPC) or to both national classification and IPC

### B. FIELDS SEARCHED

Minimum documentation searched (classification system followed by classification symbols)

G01S, B60M, G01B, G01M

Documentation searched other than minimum documentation to the extent that such documents are included in the fields searched

Electronic data base consulted during the international search (name of data base and, where practicable, search terms used)

EPODOC, INVENES, WPI

### C. DOCUMENTS CONSIDERED TO BE RELEVANT

| Category* | Citation of document, with indication, where appropriate, of the relevant passages | Relevant to claim No. |
|---|---|---|
| X | US 6097298 A (BROWN FRED A) 01/08/2000,<br>Column 4, lines 16 - 60; claims 1-3; claims 17-18; figures. | 1-5, 8, 10-12 |
| X<br><br><br>A | CN 110207597 A (HENAN GETONG INTELLIGENCE TECH CO LTD) 06/09/2019,<br>Abstract from DataBase WPI. Retrieved from EPOQUE<br>[retrieved on 04/04/2022]<br>description; figures. | 1<br><br><br>4, 10 |
| X<br>A | CN 110758423 A (KUNSHAN HI TECH TRACK TRAFFIC INTELLIGENT EQUIPMENT CO LTD) 07/02/2020,<br>description; figure 3. | 1<br>6 |
| X<br>A | ES 1099305U U (TELEFONOS LINEAS Y CENTRALES S A TELICE) 03/02/2014,<br>figure 6, paragraph [0047]; | 1<br>2-12 |

☒ Further documents are listed in the continuation of Box C.       ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 04/04/2022 | **(05/04/2022)** |

| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>E. Pina Martínez<br><br><br>Telephone No. 91 3498552 |

Form PCT/ISA/210 (second sheet) (January 2015)

## INTERNATIONAL SEARCH REPORT

| | International application No. |
|---|---|
| | PCT/ES2021/070533 |

C (continuation).          DOCUMENTS CONSIDERED TO BE RELEVANT

| Category * | Citation of documents, with indication, where appropriate, of the relevant passages | Relevant to claim No. |
|---|---|---|
| X | WO 2021123463 A1 (TELEFONOS LINEAS Y CENTRALES S A) 24/06/2021, | 1 |
| A | the whole document. | 2-12 |
| A | ES 2367067 A1 (TELICE TELEFONOS LINEAS Y CENTRALES S A) 28/10/2011, the whole document. | 1-12 |

Form PCT/ISA/210 (continuation of second sheet) (January 2015)

**INTERNATIONAL SEARCH REPORT**

International application No.

PCT/ES2021/070533

**CLASSIFICATION OF SUBJECT MATTER**

*G01S17/48* (2006.01)
*G01S17/88* (2006.01)
*B60M1/28* (2006.01)

## INTERNATIONAL SEARCH REPORT

Information on patent family members

International application No.

PCT/ES2021/070533

| Patent document cited in the search report | Publication date | Patent family member(s) | Publication date |
|---|---|---|---|
| US6097298 A | 01.08.2000 | US6229451 B1 | 08.05.2001 |
| CN110758423 A | 07.02.2020 | NONE | |
| CN110207597 A | 06.09.2019 | NONE | |
| ES1099305U U | 03.02.2014 | ES1099305Y Y | 04.01.2017 |
| WO2021123463 A1 | 24.06.2021 | NONE | |
| ES2367067 A1 | 28.10.2011 | NONE | |

Form PCT/ISA/210 (patent family annex) (January 2015)